# EUROPÄISCHE PATENTSCHRIFT

(11) **EP 0 964 198 B1**
(45) Veröffentlichungstag und Bekanntmachung des Hinweises auf die Patenterteilung: **28.09.2005**
(21) Anmeldenummer: 99104863.8
(22) Anmeldetag: 11.03.1999
(51) Int. Cl.: F16L 21/03

(54) **Rohr, insbesondere Kanalisationsrohr, mit einer Ringsicke zur Aufnahme einer Ringdichtung sowie Ringdichtung**
Pipe, particularly sewage pipe, provided with a groove for a sealing ring and a sealing ring
Tuyau, en particulier tuyau d'égout, pourvu d'une rainure pour anneau d'étancheité et anneau d'étancheité

(30) Priorität: 13.06.1998 DE 29810672 U
(43) Veröffentlichungstag der Anmeldung: 15.12.1999
(60) Teilanmeldung: 03016856.1
(73) Patentinhaber: M.O.L. GUMMIVERARBEITUNG GMBH & Co. KG, D-49377 Vechta (DE)
(72) Erfinder: Lüers Gregor, 49377 Vechta (DE)
(74) Vertreter: Meyer, Ludgerus

(56) Entgegenhaltungen:
- EP-A- 0 622 577
- WO-A-92/01886
- DE-A- 4 327 163
- GB-A- 1 063 745
- US-A- 3 236 528
- US-A- 4 850 603

## Beschreibung

Die Erfindung betrifft eine kombination umfassend eine Dichtung und ein Rohr, insbesondere Kanalisationsrohr, mit einer Ringsicke zur Aufnahme der Ringdichtung nach dem Oberbegriff des Anspruchs 1, bei dem das Spitzende eines ersten Rohres in das mit einer Ringsicke versehene Muffenende eines zweiten Rohres einsteckbar ist.

Zur Verbindung zweier Rohre, wie Kunststoff-Abwasserrohre, werden üblicherweise Ringdichtungen verwendet, die in Ringsicken des Muffenendes eines Rohres eingesetzt werden. Beim Einschieben des Spitzendes des ersten Rohres legen sich die Dichtlippen der Ringdichtung eng an das erste Rohr an, so dass die Abdichtung gewährleistet ist.

Um die Dichtung bereits bei der Herstellung des Rohres in die Ringsicke einsetzen zu können, sind besondere Maßnahmen erforderlich, um die Unverlierbarkeit der Dichtung in der Ringsicke zu gewährleisten. Eine Möglichkeit besteht darin, die Dichtung mit einer Stahl- oder Kunststoffeinlage zu versehen. Es ist auch bekannt, den Grundkörper der Dichtung relativ starr auszubilden, wobei lediglich die Dichtlippe flexibel gehalten ist.

Aus der EP 0 156 222 B1 ist eine Muffenrohrverbindung mit einem Dichtungsring bekannt, bei der die Dichtung einen massiven Haltebereich aufweist, dessen Rückenfläche an der Ringsicke anliegt, sowie einen verpreßbaren Bereich, der eine durch eine Aufspaltung gebildete Dichtlippe enthält. Die Ringdichtung weist dabei in ihrem Haltebereich einen derartigen Innendurchmesser auf, dass zwischen dem Haltebereich und dem eingeschobenen Spitzende ein Freiraum bleibt, da dieser Bereich nicht kompressibel ist und aufgrund der auftretenden Toleranzen bei den zusammenzusetzenden Rohren dieser in jedem Fall zu überbrücken ist.

Das Einschieben des Spitzendes eines Rohres in die Muffe führt dazu, dass der rückwärtige verpreßbare Bereich der Ringdichtung aufgrund des vorderseitigen Freiraumes zwischen Dichtung und eingeschobenem Rohr eine Verdrehung dieses Bereichs bewirkt, so dass zwischen vorderem massiven Haltebereich und Innenseite der Ringsicke ein offener Freiraum entstehen kann, in den Schmutz oder andere Verunreinigungen eindringen können. Der massive Haltebereich des Dichtringes erlaubt es ferner nicht, größere Toleranzen von Rohren zu überbrücken, so dass sein Einsatzgebiet stark beschränkt ist. Aufgrund der unterschiedlichen Härtegrade des Ringes ist außerdem die Herstellung relativ kostenintensiv.

Eine Firmenschrift der Firma Forsheda Gummitechnik AB, Forsheda, Schweden aus dem Jahre 1976 zeigt eine Dichtung für V-förmige Ringsicken im Muffenende eines Rohres, die zweiteilig ausgebildet ist. Es ist ein Kompressionsbereich vorgesehen, dessen Innendurchmesser kleiner als der Durchmesser eines in das Muffenende einzuschiebenden Rohres ist. Beim Zusammensetzen der Rohre wird die Dichtung soweit zusammengedrückt, dass sie in einen ringförmigen Hohlraum zwischen Dichtkörper und Sickengrund wenigstens zum Teil ausweichen kann. Im hinteren Bereich der Dichtung ist eine Metallverstärkung vorgesehen, um ein Verdrehen der Dichtung beim Einschieben des Spitzendes eines Rohres in die Muffe zu verhindern und damit die Formstabilität der Dichtung zu gewährleisten.

Obgleich diese Dichtung die gewünschte Abdichtfunktion zu erfüllen scheint, weist diese jedoch erhebliche Montagenachteile auf. Die Herstellung der Dichtung aufgrund des erforderlichen Verstärkungselements ist kostenaufwendig und schwer zu handhaben. Dies bedingt auch, dass die Dichtung bereits bei der Heißformung der Muffe darin angesetzt werden muss.

Die vorderseitig abgerundete Ausbildung der Dichtung weist auch erhebliche Nachteile beim Einschieben des Spitzendes eines Rohres in das Muffenende auf. Diese Ausbildung führt leicht dazu, dass Verschmutzungen, die sich bereits im Muffenende befinden können, oder die am Spitzende des einzuschiebenden Rohres vorhanden sind, in den ringförmigen Hohlraum zwischen Dichtung und Sickengrund eindringen können und damit die Wirkung des als Absorptionsraum vorgesehen Hohlraums aufheben können. Ferner führt diese Ausbildung leicht dazu, dass beim Einschieben des Spitzendes eines Rohres in die Muffe die Dichtung "aufgerollt" wird, wie dies insbesondere bei Kleinstmaß des Muffenendes und Toleranzgrößtmaß der Dichtung auftreten kann, so dass in diesem Fall keine Dichtfunktion gewährleistet ist.

Die Verwendung eines Metall-Verstärkungsringes verringert zwar diese Gefahr, jedoch wird dies mit zusätzlichem Kostenaufwand erkauft.

Schließlich ist eine derartig verstärkte Dichtung nur mit erheblichem Aufwand in rechteckförmige Ringsicken einsetzbar.

Aus der DE 43 27 163 A1 ist eine Rohrverbindung bekannt, bei der die Ringdichtung eine an ihrem der Einschieberichtung eines in die Muffe einzuschiebenden zugewandten Ende an der Muffeninnenwand anliegende Spannlippe aufweist, die insbesondere bei Kleinstmaß der Rohrverbindung in die Ringsicke verschiebbar ist. Sie weist zum Sickengrund hin einen Hohlraum auf, der als Verdrängungsraum für die Spannlippe dienen kann.

Es hat sich herausgestellt, dass unter bestimmten ungünstigen Paarungsverhältnissen der Rohre die Spannlippe sich entweder zwischen den Rohren verklemmt oder soweit verschoben wird, dass Verschmutzungen zwischen Sickengrund und Spannlippe eintreten können.

Aus der WO 92/01886 ist eine Rohrverbindung für ein Luftansaugrohr eines Fahrzeuges bekannt, bei der in eine mit einer Sicke versehenen endseitigen Muffe eines Rohres eine Dichtung eingesetzt ist, die die gesamte Muffe auskleidet und aus der Muffe vorsteht, so dass eine die Rohre verbindende Klemmschelle sowohl das Muffenende als auch die Dichtung unmittelbar gegen die Außenseite des in die Muffe eingeschobenen Rohres anklemmt.

Ein Teil der Dichtung liegt dabei innenseitig auf dem äußeren Muffenrand auf, der somit keine Rohrführung ermöglicht. Zur Gewährleistung der Dichtigkeit und des mechanischen Halts der Verbindung ist die Verwendung einer Klemmschelle unverzichtbar.

Schließlich zeigt die EP 0 622 577 eine Rohrverbindung, bei der eine Luftpolsterdichtung in einer Sicke einer Rohrmuffe verwendet ist, die am rückwärtigen Ende eine Andrucklippe aufweist, von der ein Teilbereich auf einer Sickenstufe der Rohrmuffe aufliegt. Diese Dichtung ist stark schmutzanfällig und daher im Kanalisationsbereich nicht einsetzbar.

Ausgehend von in der DE 43 27 163 A1 angegebenen Rohrverbindung liegt der Erfindung die Aufgabe zugrunde, ein Rohr, insbesondere Kanalisationsrohr, mit einem Muffenende mit einer Ringsicke anzugeben, deren Dichtung über große Toleranzbereiche der zu verbindenden Rohre fehlerfrei einsetzbar ist, die kostengünstig herstellbar ist und die Verunreinigungen zwischen Ringdichtung und Innenseite der Ringsicke sicher vermeidet.

Diese Aufgabe wird durch die im Anspruch 1 angegebene Erfindung gelöst. Vorteilhafte Weiterbildungen der Erfindung sind in Unteransprüchen angegeben.

Gemäß der Erfindung weist bei einem gattungsgemäßen Rohr die im wesentlichen rechteckförmige Ringsicke eine die Spannlippe stützende Stufe auf, deren Radius zwischen dem Innenradius des Rohres außerhalb der Ringsicke und dem Radius des Sickengrundes der Ringsicke bemessen ist. Durch die Erfindung besteht auch bei Kleinstmaß der Rohrverbindung keine Gefahr der Verklemmung der Spannlippe. Die Verschmutzungsgefahr in der Ringsicke bleibt gebannt. Die stufenförmige Ringsicke beschränkt die Dicke der Dichtung im Bereich der Spannlippe auf die der Spannlippe zukommende Funktion, so daß sich gegenüber bekannten Dichtungen eine Materialersparnis ergibt.

Die Erfindung wird nachstehend anhand eines Ausführungsbeispiels näher erläutert. Es zeigen:
- Fig. 1: eine Ausschnittansicht einer Verbindung zweier Rohre mit in einer Ringsicke eingelegten Ringdichtung,
- Fig. 2: eine vergrößerte Schnittansicht der Verbindung zweier Rohre, und

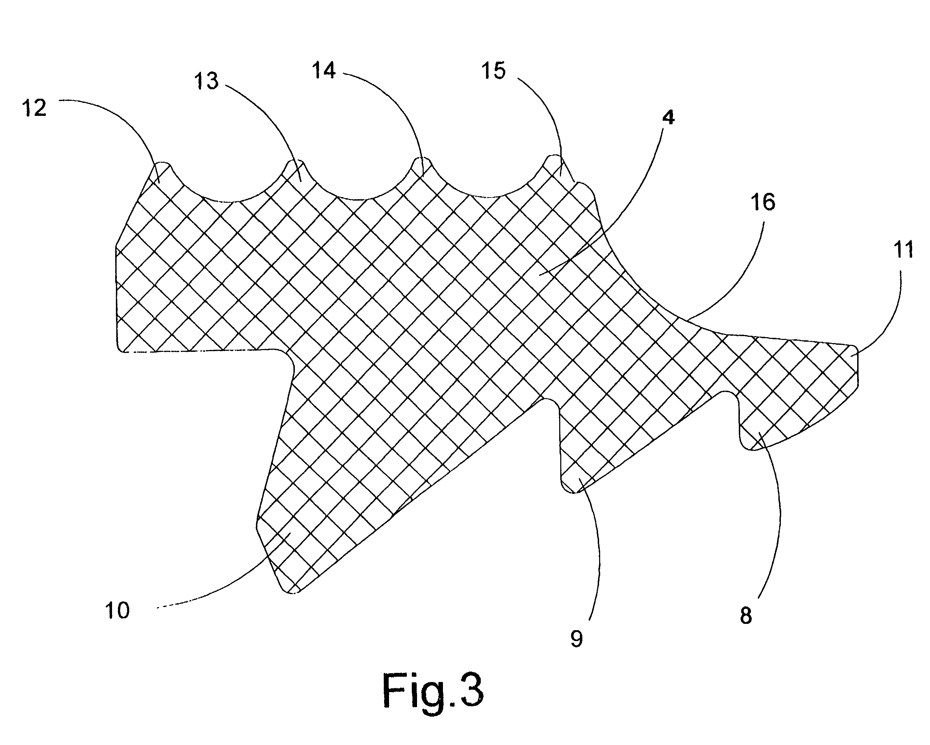

- Fig. 3: einen Querschnitt durch eine Ringdichtung.

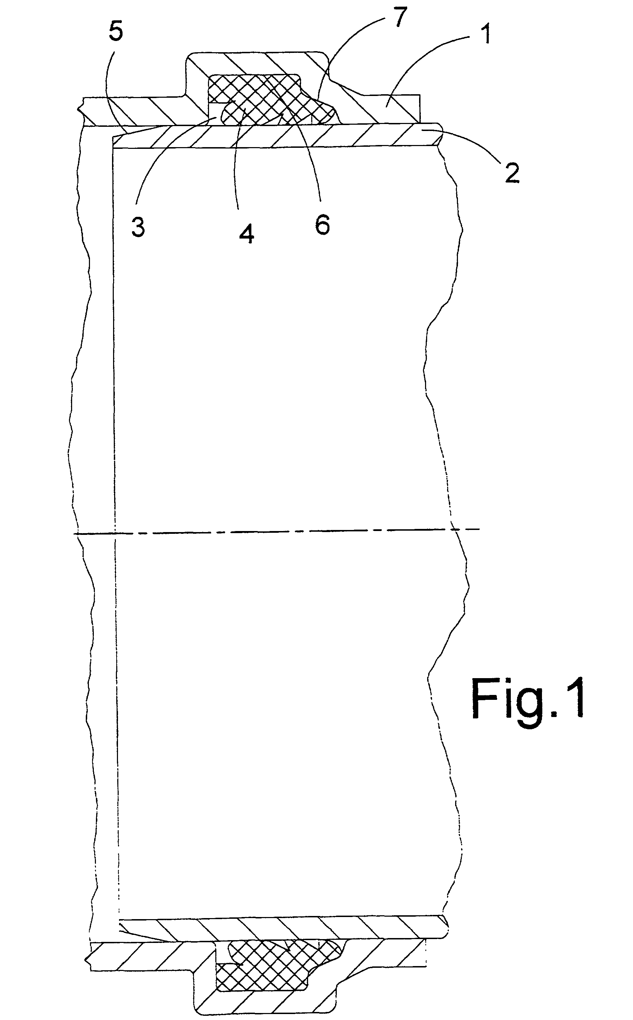

Fig. 1 zeigt das Muffenende 1 eines Rohres, insbesondere Kunststoffrohres, das mit einer Ringsicke 3 versehen ist, in die eine Ringdichtung 4 eingesetzt ist. Zum leichteren Einschieben des Spitzendes 2 des einzuschiebenden Rohres weist dieses an seinem Vorderende eine außenseitige Abschrägung 5 auf.

Die Sicke 3 ist im wesentlichen rechteckförmig gestaltet. Die im Sickengrund 6 liegende Dichtung 4 ist auf ihrer Vorderseite, d.h. gegen die Einschubrichtung des einzuschiebenen Rohres gesehen, mit einer Spannlippe versehen. Diese liegt auf einer Stufe 7 auf, die am Vorderende der Ringsicke 3 ausgebildet ist.

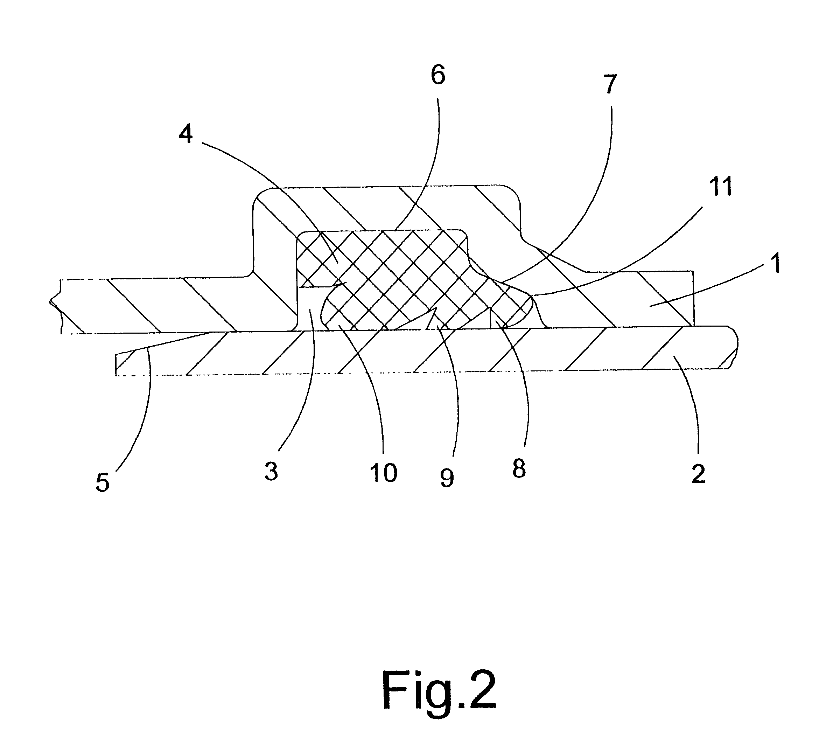

Fig. 2 zeigt eine vergrößerte Ansicht der Darstellung der Rohrverbindung. Obgleich die Ringsicke 3 im wesentlichen rechteckförmig ist und daher auch andere Arten von Dichtungen aufnehmen kann, ist erfindungsgemäß die Ausbildung einer Stufe 7 vorgesehen, die eine Spannlippe 11 der Dichtung 4 abstützt. Im unbelasteten Zustand der Dichtung 4 liegt die Dichtung auf der Stufe 7 nur im Bereich der Spannlippe 11 auf, während sie, wie in Fig. 2 dargestellt, im belasteten Zustand der Kontur der Stufe 7 folgt. Die Stufe 7 ist so bemessen, daß ihr Innenradius vom Vorderende der Dichtung her, d.h. vom Bereich der Spannlippe 11 zum Sickengrund 6 hin zunehmend ausgebildet ist. Die Abschrägung der Stufe verläuft daher in einem spitzen Winkel zur Rohrachse. Je flacher der spitze Winkel ist, um so größer kann die Andruckkraft der Dichtung im Bereich der Spannlippe 11 eingestellt werden. Die nötige Andruckkraft der Spannlippe 11 wird insbesondere durch die der Spannlippe 11 gegenüberliegende Haltelippe 8 erreicht, die von dem einzuschiebenden Spitzende eines Rohres nach außen gedrängt wird und damit die Spannlippe 11 gegen die Stufe 7 andrückt. Da der Andruckbereich der Haltelippe 8 gegenüber dem Andruckbereich der Spannlippe 11 nach rückwärts versetzt ausgestaltet ist, ergibt sich beim Einschieben des Spitzendes eines Rohres eine gewisse Verdrehung des Dichtungsbereichs zwischen Spannlippe 11 und Haltelippe 8, so daß das Material der Dichtung 4 beim Einschieben des Spitzendes vollflächig auf der Stufe 7 zur Anlage kommt. Damit ergibt sich eine hohe Andruckkraft.

Zwischen Haltelippe 8 und Hauptdichtungslippe 10 am rückwärtigen Ende der Dichtung 4 ist vorzugsweise noch eine Abstreiflippe 9 ausgebildet, die der weiteren Erhöhung der Dichtsicherheit der Dichtung dient, insbesondere Verschmutzungen abstreift, die u. U. anderfalls die Dichtfunktion der Hauptdichtlippe 10 behindern würde.

Fi.g 3 zeigt eine Dichtung im unbelasteten Zustand im Querschnitt. Es ist deutlich zu erkennen, daß die Spannlippe 11 die Verlängerung eines Bogens 16 bildet, welcher sich bei Ausbildung eines Drucks auf die Haltelippe 8 begradigt und dann der Kontur der Stufe 7 in der speziellen Ausgestaltung der Ringsicke folgt.

An der Außenseite der Dichtung sind noch Außenlippen 12 - 15 ausgebildet, die der Verankerung und Abdichtung der Dichtung 4 im Sickengrund 6 dienen. Diese werden beim Verbinden zweier Rohre zum Teil zusammengedrückt und ergeben damit eine Dichtfunktion im Bereich des Sickengrundes. Gleichzeitig gleichen sie Toleranzen in den Rohrdurchmessem aus, so daß die Dichtfunktion der Dichtung bei allen zulässigen Rohrpaarungen gewährleistet bleibt.

### Bezugszeichenliste

- 1: Muffenende
- 2: Spitzende
- 3: Ringsicke
- 4: Dichtung
- 5: Abschrägung
- 6: Sickengrund
- 7: Stufe
- 8: Haltelippe
- 9: Abstreiflippe
- 10: Hauptdichtlippe
- 11: Spannlippe
- 12: Außenlippe
- 13: Außenlippe
- 14: Außenlippe
- 15: Außenlippe
- 16: Bogen

## Patentansprüche

1. Kombination umfassend eine Dichtung und ein Rohr, insbesondere Kanalisationsrohr, mit einem Muffenende mit einer Ringsicke (3), in die die mit wenigstens einer Dichtlippe (10) versehene Ringdichtung (4) einsetzbar ist, wobei die Ringdichtung (4) an ihrem der Einschieberichtung eines einzuschiebenden Rohres entgegengerichteten vorderen Ende eine Spannlippe (11) aufweist, die am Vorderende der Ringsicke (3) an die Muffeninnenwand anlegbar ist, **dadurch gekennzeichnet, dass** die im wesentlichen rechteckförmige Ringsicke (3) innerhalb der Ringsicke eine die Spannlippe (11) abstützende Stufe (7) aufweist, deren Radius zwischen dem Innenradius des Rohres außerhalb der Ringsicke und dem Radius des Sickengrundes (6) der Ringsicke (3) bemessen ist, wobei der Innendurchmesser der unbelasteten Dichtung im Bereich der Spannlippe kleiner als das Durchmesser-Kleinstmaß eines der Dichtung dimensionsmäßig zugeordneten Rohres und größer als der Innendurchmesser des Bereichs der Dichtung ist, der die Ringsicke des zugeordneten Rohres ausfüllt.

2. Kombination nach Anspruch 1, **dadurch gekennzeichnet, dass** der Radius der Stufe (7) von dem Vorderende der Ringsicke (3) ausgehend zunehmend bemessen ist.

3. Kombination nach Anspruch 1, **dadurch gekennzeichnet, dass** die Dichtung (4) im Bereich der Spannlippe (11) eine an dem einzuschiebenden Rohr anliegende Haltelippe (8) aufweist, die in Axialrichtung der Dichtung gegenüber der Spannlippe (11) versetzt angeordnet ist.

4. Kombination nach Anspruch 3, **dadurch gekennzeichnet, dass** eine Abstreiflippe (9) zwischen Haltelippe (8) und einer im Bereich der Ringsicke des Rohres angeordneten Hauptdichtlippe (10) ausgebildet ist.

## Claims

1. Combination comprising a seal and a pipe, in particular a sewer pipe, with a socket end with an annular bead (3) in which the annular seal (4), which is provided with at least one sealing lip (10), can be inserted, wherein said annular seal (4) has, at its front end which is directed oppositely to the direction of pushing-in of a pipe which is to be pushed in, a clamping lip (11) which can be pressed against the inner wall of the socket at the front end of the annular bead (3),
**characterised in that** the substantially rectangular annular bead (3) has, inside it, a step (7) which supports the clamping lip (11) and the radius of which is dimensioned so as to be between the inner radius of the pipe outside the annular bead and the radius of the base (6) of said annular bead (3), the inner diameter of the non-loaded seal in the region of the clamping lip being smaller than the smallest dimension of the diameter of a pipe which is coordinated with the seal in terms of size, and larger than the inner diameter of that region of the seal which fills up the annular bead of the coordinated pipe.

2. Combination according to claim 1,
**characterised in that** the radius of the step (7) is of increasing size, starting from the front end of the annular bead (3).

3. Combination according to claim 1,
**characterised in that** the seal (4) has, in the region of the clamping lip (11), a retaining lip (8) which rests against the pipe to be pushed in and which is disposed so as to be offset in the axial direction of the seal in relation to the clamping lip (11).

4. Combination according to claim 3,
**characterised in that** a stripping lip (9) is constructed between the retaining lip (8) and a main sealing lip (10) disposed in the region of the annular bead of the pipe.

## Revendications

1. Combinaison comprenant un joint d'étanchéité et un tuyau, en particulier un tuyau d'égout, avec une extrémité de manchon pourvue d'une rainure annulaire (3) dans laquelle peut être inséré le joint annulaire (4) pourvu d'au moins une lèvre d'étanchéité (10), le joint annulaire (4) présentant sur son extrémité avant opposée au sens d'insertion d'un tuyau à insérer une lèvre de serrage (11) qui est apte à s'appliquer contre la paroi intérieure du manchon, sur l'extrémité avant de la rainure annulaire (3), **caractérisée en ce que** l'intérieur de la rainure annulaire (3) sensiblement rectangulaire présente un épaulement (7) qui supporte la lèvre de serrage (11) et dont le rayon est calculé pour être situé entre le rayon intérieur du tuyau à l'extérieur de la rainure annulaire et le rayon du fond (6) de ladite rainure annulaire (3), le diamètre intérieur du joint non contraint, dans la zone de la lèvre de serrage, étant plus petit que le diamètre minimal d'un tuyau associé par ses dimensions au joint d'étanchéité, et plus grand que le diamètre intérieur de la zone du joint d'étanchéité qui remplit la rainure annulaire du tuyau associé.

2. Combinaison selon la revendication 1,
**caractérisée en ce que** le rayon de l'épaulement (7) est calculé pour aller en augmentant à partir de l'extrémité avant de la rainure annulaire (3).

3. Combinaison selon la revendication 1,
**caractérisée en ce que** le joint d'étanchéité (4) présente dans la zone de la lèvre de serrage (11) une lèvre de fixation (8) qui est appliquée contre le tuyau à insérer et qui est décalée par rapport à ladite lèvre de serrage (11) dans le sens axial du joint.

4. Combinaison selon la revendication 3,
**caractérisée en ce qu'**une lèvre de raclement (9) est formée entre la lèvre de fixation (8) et une lèvre d'étanchéité principale (10) disposée dans la zone de la rainure annulaire du tuyau.
